# EUROPEAN PATENT APPLICATION

(11) **EP 3 799 077 A1**
(43) Date of publication of application: **31.03.2021**
(21) Application number: 19844021.6
(22) Date of filing: 06.06.2019
(51) Int. Cl.: G21K 1/00, G01B 9/02, H01S 1/06

(54) **COLD ATOM BEAM GENERATION METHOD, COLD ATOM BEAM GENERATION DEVICE, AND ATOMIC INTERFEROMETER**

(30) Priority: 31.07.2018 JP 2018143782
(71) Applicant: Japan Aviation Electronics Industry, Limited, Shibuya-ku Tokyo 150-0043 (JP); Tokyo Institute of Technology, Tokyo 152-8550 (JP)
(72) Inventor: INOUE, Ryotaro, Meguro-ku, Tokyo 152-8550 (JP); KOZUMA, Mikio, Meguro-ku, Tokyo 152-8550 (JP); TANAKA, Atsushi, Shibuya-ku, Tokyo 150-0043 (JP)
(74) Representative: MERH-IP Matias Erny Reichl Hoffmann Patentanwälte PartG mbB
(86) International application number: PCT/JP2019/022443
(87) International publication number: WO 2020/026588

(57) **Abstract**

Provided is a cold atomic beam generation technology that causes a cold atomic beam to travel in a direction different from the traveling direction of a pushing laser beam. The pushing laser beam is used to generate a cold atomic beam from atoms trapped in a space. Next, the cold atomic beam is deflected by using a zero magnetic field line of a quadrupole magnetic field in a two-dimensional magneto-optical trap mechanism or by using a drift direction of a standing light wave in a moving molasses mechanism.

## Description

### TECHNICAL FIELD

The present invention relates to a cold atomic beam generation technology and an atomic interferometer using the cold atomic beam generation technology.

### BACKGROUND ART

Recently, with the progression of laser technology, various cold atomic beam generation technologies have been developed. The technologies disclosed in Non-Patent Literatures 1 to 8 for example are known as cold atomic beam generation technologies.

According to Non-Patent Literatures 1 to 3, atoms are cooled inside a two-dimensional magneto-optical trap (2D-MOT) mechanism that includes magnetic field generation coils called hairpin wires and pairs of laser beams for cooling, and the principle of moving-molasses is utilized to draw out a cold atomic beam from a cold atom cloud (for example, see Fig. 1 of Non-Patent Literature 2).

According to Non-Patent Literature 4, atoms are cooled inside a 2D-MOT mechanism that includes magnetic field generation coils and pairs of laser beams for cooling, and a pushing laser beam is utilized to draw out a cold atomic beam from a cold atom cloud.

According to Non-Patent Literature 5, in a configuration such that, in a three-dimensional magneto-optical trap (3D-MOT) mechanism, a retroreflector for generating one of three pairs of laser beams is replaced with a perforated reflective quarter-wave plate, asymmetric scattering rates in the one pair of laser beams are utilized to draw out a cold atomic beam from a cold atom cloud. This technology is referred to as a low-velocity intense source (LVIS).

According to Non-Patent Literature 6, in a configuration such that one pair of laser beams in line with a zero magnetic field line of a two-dimensional quadrupole magnetic field is added to a 2D-MOT mechanism, differences in the beam intensity in the one pair of laser beams are utilized to draw out a cold atomic beam from a cold atom cloud (for example, see Fig. 1 of Non-Patent Literature 6). This technology is referred to as 2D⁺-MOT.

According to Non-Patent Literature 7, laser beams and a perforated pyramidal reflector are used to cool atoms three-dimensionally and also draw out a cold atomic beam from a cold atom cloud.

According to Non-Patent Literature 8, two types of laser beams (that is, a pushing laser beam and a hollow laser beam) that travel on the zero magnetic field line of a quadrupole magnetic field in a 2D-MOT mechanism are utilized to obtain a cold atomic beam with improved flux and velocity distribution (for example, see Fig. 3 of Non-Patent Literature 8). This technology is referred to as 2D-HP MOT.

### PRIOR ART LITERATURE

### NON-PATENT LITERATURE

Non-Patent Literature 1: E. Riis, D.S. Weiss, K.A. Moler, and S. Chu, "Atom Funnel for the Production of a Slow, High-Density Atomic Beam," Phys. Rev. Lett. 64, 1658 (1990).
Non-Patent Literature 2: Swanson, T.B.; Silva, N.J.; Mayer, Shannon K.; Maki, J.J.; and McIntyre, D.H., "Rubidium atomic funnel," (1996). Physics Faculty Publications and Presentations. 30.
Non-Patent Literature 3: T.B. Swanson, N.J. Silva, S.K. Mayer, J.J. Maki and D.H. McIntyre: "Rubidium atomic funnel," J. Opt. Soc. Am. B, 13, 9, p. 1833 (1996).
Non-Patent Literature 4: J. Schoser, A. Batar, R. Low, V. Schweikhard, A. Grabowski, Yu.B. Ovchinnikov, and T. Pfau, "Intense source of cold Rb atoms from a pure two-dimensional magneto-optical trap," PHYSICAL REVIEW A, 66, 023410 2002.
Non-Patent Literature 5: Z. Lu, K. Corwin, M. Renn, M. Anderson, E. Cornell and C. Wieman: "Low-Velocity Intense Source of Atoms from a Magneto-optical Trap," Phys. Rev. Lett., 77, 16, pp. 3331-3334 (1996).
Non-Patent Literature 6: K. Dieckmann, R. Spreeuw, M. Weidemuller and J. Walraven: "Two-dimensional magneto-optical trap as a source of slow atoms," Phys. Rev. A, 58, 5, pp. 3891-3895 (1998).
Non-Patent Literature 7: J. Arlt, O. Marago, S. Webster, S. Hopkins and C. Foot: "A pyramidal magnetooptical trap as a source of slow atoms," Opt. Commun., December, pp. 303-309 (1998).
Non-Patent Literature 8: Jia-Qiang Huang, Xue-Shu Yan, Chen-Fei Wu, Jian-Wei Zhang, and Li-Jun Wang, "Intense source of cold cesium atoms based on a two-dimensional magneto-optical trap with independent axial cooling and pushing," Chin. Phys. B Vol. 25, No. 6 063701 (2016).

### SUMMARY OF THE INVENTION

### PROBLEMS TO BE SOLVED BY THE INVENTION

Cold atomic beam generation technology is used in various technologies, and is used in atomic interferometers such as a Mach-Zehnder atomic interferometer and a Ramsey-Bordé atomic interferometer, for example. In an atomic interferometer, a cold atomic beam is subjected to the action of moving standing light waves, each of which is generated by counterpropagating two laser beams having different frequencies and which has a drift velocity according to the difference frequency.

According to cold atomic beam generation technology, the laser beam may travel in the traveling direction of the generated cold atomic beam in some cases. According to the configuration disclosed in Non-Patent Literature 4, because a cold atomic beam is drawn out from a cold atom cloud by using a pushing laser beam, the pushing laser beam travels in the traveling direction of the generated cold atomic beam. According to the configuration disclosed in Non-Patent Literature 5, one of the two laser beams forming the laser beam pair effectively acts as a pushing laser beam, and the pushing laser beam exits the hole in the perforated reflective quarter-wave plate together with the cold atomic beam. According to the configuration disclosed in Non-Patent Literature 6, one of the two laser beams forming the laser beam pair effectively acts as a pushing laser beam, and the pushing laser beam exits together with the cold atomic beam from the hole in the perforated reflective plate which is disposed to make one of the two laser beams oppose the other laser beam. According to the configuration disclosed in Non-Patent Literature 7, one of the laser beams acts as a pushing laser beam, and the laser beam exits together with the cold atomic beam from the hole in the perforated pyramidal reflector. According to the configuration disclosed in Non-Patent Literature 8, one of the two types of laser beams is a pushing laser beam, and the pushing laser beam exists together with the cold atomic beam from the hole in the perforated reflective plate for reflecting the other (that is, hollow laser beam) of the two types of laser beams.

In such cases, because the pushing laser beam enters the atomic interferometer at the same time as the cold atomic beam, there is a possibility that the pushing laser beam will influence the atomic interference.

However, these cold atomic beam generation technologies are capable of achieving cold atomic beams with low velocity, narrow velocity spread, and high flux, and it is desirable to be able to use these cold atomic beam generation technologies in atomic interferometers.

Consequently, an object of the present invention is to provide a cold atomic beam generation technology that causes the cold atomic beam to travel in a direction different from the traveling direction of the pushing laser beam.

### MEANS TO SOLVE THE PROBLEMS

A cold atomic beam generation technology of the present invention generates, by using a pushing laser beam, a cold atomic beam from atoms trapped in a space, and deflects the cold atomic beam by using a zero magnetic field line of a quadrupole magnetic field in a two-dimensional magneto-optical trap mechanism or by using a drift direction of a standing light wave in a moving molasses mechanism.

An atomic interferometer of the present invention includes: a cold atomic beam generation apparatus to continuously generate a cold atomic beam; a moving standing light wave generator to generate three or more moving standing light waves; and an interference device to obtain an atomic beam as a result of interaction between the cold atomic beam and the three or more moving standing light waves. The cold atomic beam generation apparatus includes: an atomic source; a cold atomic beam generator to generate, by using a pushing laser beam, a cold atomic beam from atoms which have come from the atomic source and have trapped in a space; and an atomic beam deflector that the cold atomic beam from the cold atomic beam generator enters. The atomic beam deflector includes a two-dimensional magneto-optical trap mechanism or a moving molasses mechanism. A traveling direction of the cold atomic beam from the cold atomic beam generator matches a traveling direction of the pushing laser beam, and in a case where the atomic beam deflector includes the two-dimensional magneto-optical trap mechanism, a zero magnetic field line of a quadrupole magnetic field in the two-dimensional magneto-optical trap mechanism intersects the traveling direction of the cold atomic beam from the cold atomic beam generator, and in a case where the atomic beam deflector includes the moving molasses mechanism, a drift direction of a standing light wave in the moving molasses mechanism intersects the traveling direction of the cold atomic beam from the cold atomic beam generator.

### EFFECTS OF THE INVENTION

According to the present invention, an atomic beam deflector can be used to make the cold atomic beam travel in a direction different from the traveling direction of the pushing laser beam.

### BRIEF DESCRIPTION OF THE DRAWINGS

Fig. 1 is a diagram for explaining a configuration (Example 1) of an atomic interferometer using a cold atomic beam generation apparatus; and

Fig. 2 is a diagram for explaining a configuration (Example 2) of an atomic interferometer using a cold atomic beam generation apparatus.

### DETAILED DESCRIPTION OF THE EMBODIMENTS

An embodiment of the present invention will be described with reference to the drawings. It should be noted that the drawings are provided to aid understanding of the embodiment, and the dimensions of the illustrated components are not accurate.

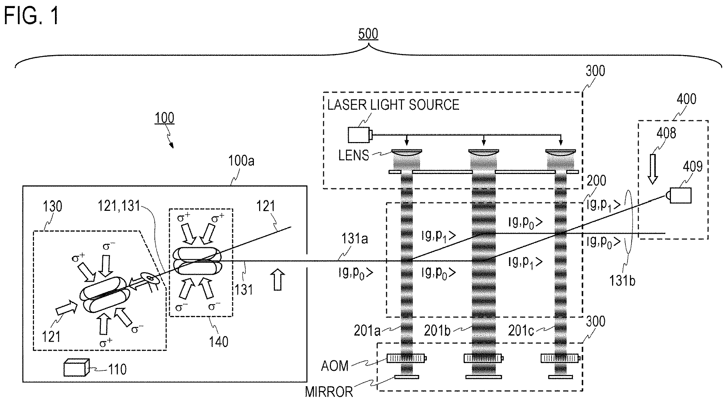

In the exemplary embodiment, a cold atomic beam generation apparatus 100 according to the embodiment of the present invention and a Mach-Zehnder atomic interferometer 500 that utilizes the cold atomic beam generation apparatus 100 are described. The Mach-Zehnder atomic interferometer 500 includes: the cold atomic beam generation apparatus 100 that continuously generates a cold atomic beam 131a in which individual atoms are in the same state; an interference device 200; a moving standing light wave generator 300; and a monitor 400 (see Fig. 1). In the embodiment, the cold atomic beam generation apparatus 100, the interference device 200, and the monitor 400 are housed inside a vacuum chamber not illustrated.

The cold atomic beam generation apparatus 100 includes: inside a partition 100a of the vacuum chamber, an atomic source 110; a cold atomic beam generator 130 that uses pushing laser beam 121 to generate a cold atomic beam from atoms which have come from the atomic source 110 and have trapped in a space; and an atomic beam deflector 140 in which the cold atomic beam 131 from the cold atomic beam generator 130 goes. In this embodiment, the cold atomic beam generation apparatus 100 has a configuration that includes the 2D⁺-MOT mechanism and the 2D-MOT mechanism, and thus consequently the cold atomic beam generator 130 corresponds to the 2D⁺-MOT mechanism and the atomic beam deflector 140 corresponds to the 2D-MOT mechanism.

To give a simple example, the 2D⁺-MOT mechanism includes: coils for forming a two-dimensional quadrupole magnetic field (for example, Ioffe coils); and three pairs of laser beams which are disposed on the three axes of symmetry of the two-dimensional quadrupole magnetic field. In the 2D⁺-MOT mechanism, the three pairs of laser beams apply a damping force to each atom according to the velocity of the atom (to form an optical molasses), and additionally the radiation pressure difference of each laser beam pair, which is caused by the Zeeman shift according to the position of the atom due to the two-dimensional quadrupole magnetic field and the transition selection rule in each laser beam pair, applies a damping force (for example, a force toward the zero magnetic field line of the two-dimensional quadrupole magnetic field) to each atom according to the position of the atom, resulting in generation of a cold atom cloud of atoms trapped in a space.

Each of two out of the three laser beam pairs is a pair of circularly polarized light σ⁺ and σ⁻ (where σ⁻ corresponding to σ⁺ is formed by reflecting σ⁺ with a reflective quarter-wave plate) that travel in opposition to each other and also have the same frequency (specifically, a frequency slightly lower than the resonant frequency of the atom). The two laser beam pairs orthogonally intersect each other (specifically, the traveling direction of σ⁺ for example in one of the laser beam pairs orthogonally intersects the traveling direction of σ⁺ for example in the other laser beam pair), and furthermore, each of the two laser beam pairs intersects the zero magnetic field line of the two-dimensional quadrupole magnetic field formed by the coils. Each of the two laser beam pairs laser-cools atoms existing in the space inside the 2D⁺-MOT mechanism in a direction orthogonal to the zero magnetic field line.

The remaining laser beam pair among the three laser beam pairs is a pair of circularly polarized light σ⁺ and σ⁻ that travel in opposition to each other on the zero magnetic field line of the two-dimensional quadrupole magnetic field and also have the same frequency (specifically, a frequency slightly lower than the resonant frequency of the atom). The laser beam pair laser-cools atoms existing in the space inside the 2D⁺-MOT mechanism in the direction of the zero magnetic field line. However, the beam intensity of one of the laser beams forming the laser beam pair is set stronger than the beam intensity of the other laser beam. Also, the other laser beam is introduced into the space inside the coils using a perforated reflective plate disposed at a 45 degree angle with respect to the direction of the zero magnetic field line, and therefore the other laser light includes a "shadow (that is, dark part) in the direction of the zero magnetic field line" corresponding to the hole in the perforated reflective plate. Consequently, one of the laser beams effectively acts as the pushing laser beam 121 due to the beam intensity difference and the asymmetric scattering rates, and the cold atomic beam 131 is drawn out through the perforated reflective plate from the cold atom cloud trapped near the zero magnetic field line. Also, as described above, one of the laser beams (effectively the pushing laser beam) leaks out together with the cold atomic beam from the hole in the perforated reflective plate.

To give a simple example, the 2D-MOT mechanism has a configuration such that one laser beam pair on the zero magnetic field line of the two-dimensional quadrupole magnetic field is excluded from the 2D⁺-MOT mechanism.

In such a cold atomic beam generation apparatus 100, the traveling direction of the cold atomic beam 131 from the cold atomic beam generator 130 (that is, the direction of the zero magnetic field line of the two-dimensional quadrupole magnetic field) matches the traveling direction of the pushing laser beam 121 (in other words, one of the laser beams forming the one laser beam pair on the zero magnetic field line of the two-dimensional quadrupole magnetic field).

The cold atomic beam generator 130 and the atomic beam deflector 140 have a positional relationship such that the zero magnetic field line of the quadrupole magnetic field in the 2D-MOT mechanism of the atomic beam deflector 140 intersects the traveling direction of the cold atomic beam 131 from the cold atomic beam generator 130 (in other words, the direction of the zero magnetic field line of the two-dimensional quadrupole magnetic field in the 2D⁺-MOT mechanism). The angle between the direction of the zero magnetic field line of the quadrupole magnetic field in the 2D-MOT mechanism and the direction of the zero magnetic field line of the two-dimensional quadrupole magnetic field in the 2D⁺-MOT mechanism is determined according to factors such as design conditions, but is set to a predetermined angle from 5 degrees or greater to 60 degrees or less, for example.

Also, the atomic source 110 has a configuration in which a solid is sublimated or a configuration in which a liquid evaporates or volatilizes. The solid or liquid is preferably made from a highly pure single element.

In the cold atomic beam generation apparatus 100 described above, first, gaseous atoms are obtained from the atomic source 110. In the case of using an element such as strontium or calcium, a heating device is necessary, but in the case of using an element such as rubidium or cesium, the saturated vapor pressure is high (that is, the element readily vaporizes) at room temperature (that is, a temperature suited to human activity), and therefore sufficient gaseous atoms can be obtained without using a heating device.

The gaseous atoms (hereinafter simply referred to as the atoms) filling the partition 100a of the vacuum chamber are naturally supplied to the 2D⁺-MOT mechanism (in this embodiment, the cold atomic beam generator 130). In the 2D⁺-MOT mechanism, as described earlier, the pushing laser beam 121 is used to generate the cold atomic beam 131 from the cold atom cloud trapped in the space inside the coils, and furthermore, the pushing laser beam 121 leaks out in the traveling direction of the cold atomic beam 131.

In view of the flux of the cold atomic beam 131 that can be achieved in light of the current technological level, the total number of collisions per unit time and per unit volume between the cold atomic beam 131 and the atoms filling the partition 100a of the vacuum chamber is sufficiently small (in other words, the mean free path is long).

The cold atomic beam 131 and the leaking pushing laser beam 121 enter the atomic beam deflector 140 having a configuration that includes the 2D-MOT mechanism. From the above-described positional relationship between the cold atomic beam generator 130 and the atomic beam deflector 140, the cold atomic beam 131 and the leaking pushing laser beam 121 obliquely cross the zero magnetic line of the quadrupole magnetic field in the 2D-MOT mechanism of the atomic beam deflector 140. Additionally, because of the damping force according to the velocity and position of each atom by the 2D-MOT mechanism, the path of the cold atomic beam 131 is changed to the direction of the zero magnetic field line of the quadrupole magnetic field in the 2D-MOT mechanism. However, the pushing laser beam 121 is unaffected by the 2D-MOT mechanism, and therefore the path of the pushing laser beam 121 is unchanged. Consequently, the atomic beam deflector 140 causes the cold atomic beam 131 to travel in a direction different from the traveling direction of the pushing laser beam 121. The individual atoms included in the cold atomic beam 131 from the atomic beam deflector 140 are set to the same energy level by optical pumping. The cold atomic beam 131a composed of atoms at the same energy level enter the interference device 200. The pushing laser beam 121 traveling in a direction different from the traveling direction of the cold atomic beam 131 (131a) is terminated appropriately and does not enter the interference device 200.

Before describing the interference device 200, the moving standing light wave generator 300 will be described. The Mach-Zehnder atomic interferometer 500 uses nth-order Bragg diffraction (where n is a predetermined positive integer equal to or greater than 2). The moving standing light wave generator 300 generates three moving standing light waves (first moving standing light wave 201a, second moving standing light wave 201b, and third moving standing light wave 201c) that satisfy the nth-order Bragg condition. Condition are also met such that the first moving standing light wave 201a functions as a splitter of the atomic beam, the second moving standing light wave 201b functions as a mirror of the atomic beam, and the third moving standing light wave 201c functions as a combiner of the atomic beam.

Each of the three moving standing light waves (first moving standing light wave 201a, second moving standing light wave 201b, third moving standing light wave 201c) meeting such conditions is achieved by appropriately setting the beam waist, wavelength, and light intensity of a Gaussian beam as well as setting the difference frequency between counterpropagating laser beams. Note that the beam waist of the Gaussian beam can be optically set (for example, by condensing laser light with a lens), and the light intensity of the Gaussian beam can be electrically set (for example, by adjusting the output of the Gaussian beam). In other words, generation parameters of the moving standing light waves are different from generation parameters used in the related art, but since the configuration of the moving standing light wave generator 300 that generates the three moving standing light waves is not different from a configuration of a moving standing light wave generator in the related art, a description of the configuration of the moving standing light wave generator 300 is omitted (in Fig. 1, components such as a laser light source, lenses, mirrors, and AOMs are illustrated as an outline).

In the interference device 200, the cold atomic beam 131a passes through the three moving standing light waves 201a, 201b, and 201c. In the atomic interferometer according to the embodiment, the transition by light irradiation between two different momentum states |g, p₀> and |g, p₁> in the same internal state is used.

In the course of the cold atomic beam 131a passing through the first moving standing light wave 201a, the state of the individual atoms in the initial state |g, p₀> changes to the superposition state of |g, p₀> and |g, p₁>. By appropriately setting interaction between the first moving standing light wave 201a and the atoms, in other words, by appropriately setting the beam waist, the wavelength, the light intensity and the difference frequency between the counterpropagating laser beams, the ratio between the existence probability of |g, p₀> and the existence probability of |g, p₁> immediately after passing through the first moving standing light wave 201a is 1:1. While transiting from |g, p₀> to |g, p₁> through stimulated absorption and emission of 2n photons traveling against each other, each atom acquires momentum of 2n photons (=p₁-p₀). Consequently, the moving direction of atoms in the state |g, p₁> is largely deviated from the moving direction of atoms in the state |g, p₀>. In other words, in the course of the cold atomic beam 131a passing through the first moving standing light wave 201a, the cold atomic beam 131a splits into an atomic beam composed of atoms in the state |g, p₀> and an atomic beam composed of atoms in the state |g, p₁> at a ratio of 1:1. The traveling direction of the atomic beam composed of atoms in the state |g, p₁> is a direction based on the nth-order Bragg condition. The angle between the direction of 0th order light (that is, the traveling direction of the atomic beam composed of atoms in the state |g, p₀> that were not subjected to Bragg diffraction) and the direction based on the nth-order Bragg condition is n times the angle between the direction of the 0th order light and the direction based on the first-order Bragg condition. That is to say, the spread (in other words, deviation) between the traveling direction of the atomic beam composed of atoms in the state |g, p₀> and the traveling direction of the atomic beam composed of atoms in the state |g, p₁> can be increased.

After the split, the atomic beam composed of atoms in the state |g, p₀> and the atomic beam composed of atoms in the state |g, p₁> pass through the second moving standing light wave 201b. Here, by appropriately setting interaction between the second moving standing light wave 201b and the atoms, in other words, by setting appropriately the beam waist, the wavelength, the light intensity and the difference frequency between the counterpropagating laser beams, the atomic beam composed of atoms in the state |g, p₀> is reversed to an atomic beam composed of atoms in the state |g, p₁> in the course of passing through the second moving standing light wave 201b, and the atomic beam composed of atoms in the state |g, p₁> is reversed to an atomic beam composed of atoms in the state |g, p₀> in the course of passing through the second moving standing light wave 201b. At this time, with regard to the former, the traveling direction of the atoms that have transitioned from |g, p₀> to |g, p₁> is deviated from the moving direction of atoms in the state |g, p₀>, as described earlier. As a result, the traveling direction of the atomic beam composed of atoms in the state |g, p₁> after passing through the second moving standing light wave 201b becomes parallel to the traveling direction of the atomic beam composed of atoms in the state |g, p₁> after passing through the first moving standing light wave 201a. With regard to the latter, in transition from |g, p₁> to |g, p₀> through stimulated absorption and emission of 2n photons traveling against each other, each atom loses the same momentum as the momentum obtained from the 2n photons. In other words, the traveling direction of atoms after transition from |g, p₁> to |g, p₀> is deviated from the moving direction of atoms in the state |g, p₁> before the transition. As a result, the traveling direction of the atomic beam composed of atoms in the state |g, p₀> after passing through the second moving standing light wave 201b becomes parallel to the traveling direction of the atomic beam composed of atoms in the state |g, p₀> after passing through the first moving standing light wave 201a.

After the reversal, the atomic beam composed of atoms in the state |g, p₀> and the atomic beam composed of atoms in the state |g, p₁> pass through the third moving standing light wave 201c. In the course of the passing, the atomic beam composed of atoms in the state |g, p₀> after the reversal and the inverted atomic beam composed of atoms in the state |g, p₁> after the reversal cross each other. Here, by appropriately setting interaction between the third moving standing light wave 201c and the atoms, in other words, by setting appropriately the beam waist, the wavelength, the light intensity and the difference frequency between the counterpropagating laser beams, it is possible to obtain an atomic beam 131b corresponding to a superposition state of |g, p₀> and |g, p₁> of individual atoms included in the crossing region between the atomic beam composed of atoms in the state |g, p₀> and the atomic beam composed of atoms in the state |g, p₁>. Theoretically, the traveling direction of the cold atomic beam 131b obtained after passing through the third moving standing light wave 201c is any one or both of the direction of the 0th order light and the direction based on the nth-order Bragg condition.

While an angular velocity or an acceleration in a plane including two paths of the atomic beams from the action of the first moving standing light wave 201a to the action of the third moving standing light wave 201c is applied to the Mach-Zehnder atomic interferometer 500, a phase difference is produced in the two paths of the atomic beams from the action of the first moving standing light wave 201a to the action of the third moving standing light wave 201c, and this phase difference is reflected in the existence probabilities of the state |g, p₀> and the state |g, p₁> of the individual atoms after passing through the third moving standing light wave 201c. Consequently, the monitor 400 detects the angular velocity or the acceleration by monitoring the cold atomic beam 131b from the interference device 200 (in other words, the cold atomic beam 131b obtained after passing through the third moving standing light wave 201c). For example, the monitor 400 irradiates the cold atomic beam 131b from the interference device 200 with probe light 408 and detects fluorescence from the atoms in the state |g, p₁> using a photodetector 409. Examples of the photodetector 409 include a photomultiplier tube and a fluorescence photodetector. According to the present embodiment, because spatial decomposition improves, namely because of the wide separation between the two paths (in other words, the atomic beam composed of atoms in the state |g, p₀> and the atomic beam composed of atoms in the state |g, p₁>) after passing through the third moving standing light wave, a CCD image sensor can also be used as the photodetector 409. Alternatively, in the case of using a channeltron as the photodetector 409, the atomic beam of one of the two paths after passing through the third moving standing light wave may be ionized by a laser beam or the like instead of the probe light, and the ions may be detected using the channeltron.

### <Other embodiments>

In the foregoing embodiment, the cold atomic beam generator 130 has a configuration that includes the 2D⁺-MOT mechanism. However, because it is sufficient to generate a cold atomic beam from atoms trapped in a space by using a pushing laser beam, the cold atomic beam generator 130 is not limited to have a configuration that includes the 2D⁺-MOT mechanism and may also have a configuration that includes the LVIS mechanism, a configuration that includes the 2D-MOT mechanism, a configuration that includes the 2D-HP MOT mechanism, or a configuration that generates a cold atomic beam by using laser beams and a perforated pyramidal reflector, for example.

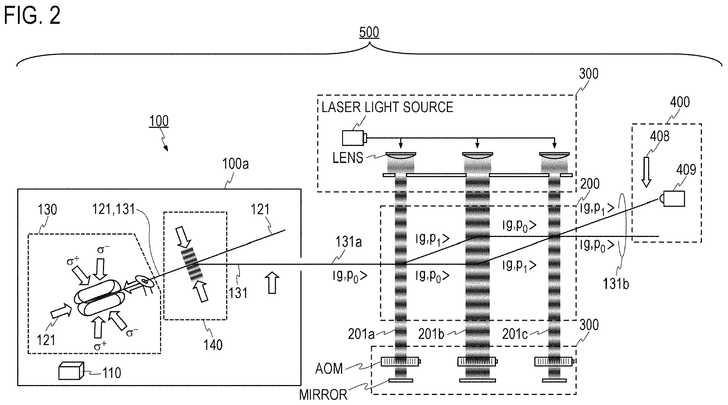

In the foregoing embodiment, the atomic beam deflector 140 has a configuration that includes the 2D-MOT configuration. However, because it is sufficient to deflect the cold atomic beam from the cold atomic beam generator 130, the atomic beam deflector 140 is not limited to have a configuration that includes the 2D-MOT mechanism, and may also have a configuration that includes a moving molasses mechanism, for example (see Fig. 2).

To give a simple example, the moving molasses mechanism includes at least one pair of laser beams. The pair of laser beams forms a moving standing light wave. The moving standing light wave imparts a velocity to atoms in the drift direction. In the case where the moving molasses mechanism includes two pairs of laser beams, each pair forms a moving standing light wave. Atoms entering the intersection region between the two moving standing light waves are imparted with a velocity in the drift direction of the two moving standing light waves (specifically, the combined direction of the two drift directions).

In the case where the atomic beam deflector 140 has a configuration that includes the moving molasses mechanism, the cold atomic beam generator 130 and the atomic beam deflector 140 have a positional relationship such that the drift direction of the standing light waves in the moving molasses mechanism intersects (preferably orthogonally) the traveling direction of the cold atomic beam from the cold atomic beam generator.

The cold atomic beam 131 and the leaking pushing laser beam 121 enter the atomic beam deflector 140 having a configuration that includes the moving molasses mechanism. From the above-described positional relationship between the cold atomic beam generator 130 and the atomic beam deflector 140, the cold atomic beam 131 and the leaking pushing laser beam 121 obliquely cross the drift direction of the standing light wave in the moving molasses mechanism of the atomic beam deflector 140. Thereafter, the path of the cold atomic beam 131 is changed by the principle of the moving molasses. However, the pushing laser beam 121 is unaffected by the moving molasses mechanism, and therefore the path of the pushing laser beam 121 is unchanged. Consequently, the atomic beam deflector 140 causes the cold atomic beam 131 to travel in a direction different from the traveling direction of the pushing laser beam 121.

The foregoing embodiment describes a Mach-Zehnder atomic interferometer that uses the nth-order (n ≥ 2) Bragg diffraction, but the atomic interferometer is not limited to this type and may also be a Mach-Zehnder atomic interferometer that uses two-photon Raman transitions caused by a moving standing light wave (see Reference Literature 1), for example. Reference Literature 1: T.L. Gustavson, P. Bouyer and M.A. Kasevich, "Precision Rotation Measurements with an Atom Interferometer Gyroscope," Phys. Rev. Lett. 78, 2046-2049, Published 17 March 1997.

As another example, the foregoing embodiment uses a Mach-Zehnder atomic interferometer that performs one split, one inversion, and one combination using three moving standing light waves, but the configuration thereof is not limited to such an embodiment, and the atomic interferometer of the present invention may also be carried out as an embodiment that uses a multi-stage Mach-Zehnder atomic interferometer that performs two or more splits, two or more inversions, and two or more combinations for example. For an example of such a multi-stage Mach-Zehnder atomic interferometer, see Reference Literature 2. Reference Literature 2: Takatoshi Aoki et al., "High-finesse atomic multiple-beam interferometer comprised of copropagating stimulated Raman-pulse fields," Phys. Rev. A, 63, 063611 (2001) - Published 16 May 2001.

Also, the atomic interferometer of the present invention is not limited to a Mach-Zehnder atomic interferometer and may also be a Ramsey-Bordé atomic interferometer, for example.

The foregoing describes embodiments of the present invention, but the present invention is not limited to these embodiments. Various modification and alterations are possible without departing from the gist of the present invention. The embodiments have been selected and describe to explain the principle and a practical application of the present invention. The present invention is used as various embodiments in association with various modifications or alterations, and the various modifications or alterations are determined according to the anticipated usage. All such modifications and alterations are intended to be included within the scope of the present invention as defined by the appended claims and are intended to be given the same protection when interpreted according to their fair, lawful, and impartial scope.

### DESCRIPTION OF REFERENCE NUMERALS

- 100: cold atomic beam generation apparatus
- 100a: partition
- 110: atomic source
- 121: pushing laser beam
- 130: cold atomic beam generator
- 140: atomic beam deflector
- 131: cold atomic beam
- 131a: cold atomic beam
- 131b: cold atomic beam
- 200: interference device
- 201a: first moving standing light wave
- 201b: second moving standing light wave
- 201c: third moving standing light wave
- 300: moving standing light wave generator
- 400: monitor
- 408: probe light
- 409: photodetector
- 500: atomic interferometer

## Claims

1. A method for generating a cold atomic beam, the method comprising:
a cold atomic beam generating step of generating the cold atomic beam from atoms trapped in a space, by using a pushing laser beam; and
an atomic beam deflecting step of deflecting the cold atomic beam, wherein
in the atomic beam deflecting step, the cold atomic beam is deflected by using a zero magnetic field line of a quadrupole magnetic field in a two-dimensional magneto-optical trap mechanism or by using a drift direction of a standing light wave in a moving molasses mechanism.

2. An apparatus for generating a cold atomic beam, the apparatus comprising:
an atomic source;
a cold atomic beam generator to generate the cold atomic beam from atoms come from the atomic source and trapped in a space, by using a pushing laser beam; and
an atomic beam deflector that the cold atomic beam from the cold atomic beam generator enters, wherein
the atomic beam deflector includes a two-dimensional magneto-optical trap mechanism or a moving molasses mechanism,
a traveling direction of the cold atomic beam from the cold atomic beam generator matches a traveling direction of the pushing laser beam,
in a case where the atomic beam deflector includes the two-dimensional magneto-optical trap mechanism, a zero magnetic field line of a quadrupole magnetic field in the two-dimensional magneto-optical trap mechanism intersects the traveling direction of the cold atomic beam from the cold atomic beam generator, and
in a case where the atomic beam deflector includes the moving molasses mechanism, a drift direction of a standing light wave in the moving molasses mechanism intersects the traveling direction of the cold atomic beam from the cold atomic beam generator.

3. The apparatus according to Claim 2, wherein
the atomic source has a configuration in which a solid is sublimated or a configuration in which a liquid evaporates or volatilizes.

4. An atomic interferometer comprising:
a cold atomic beam generation apparatus to continuously generate a cold atomic beam;
a moving standing light wave generator to generate three or more moving standing light waves; and
an interference device to obtain an atomic beam as a result of interaction between the cold atomic beam and the three or more moving standing light waves, wherein
the cold atomic beam generation apparatus includes
an atomic source,
a cold atomic beam generator to generate a cold atomic beam from atoms come from the atomic source and trapped in a space, by using a pushing laser beam, and
an atomic beam deflector that the cold atomic beam from the cold atomic beam generator enters,
the atomic beam deflector includes a two-dimensional magneto-optical trap mechanism or a moving molasses mechanism,
a traveling direction of the cold atomic beam from the cold atomic beam generator matches a traveling direction of the pushing laser beam,
in a case where the atomic beam deflector includes the two-dimensional magneto-optical trap mechanism, a zero magnetic field line of a quadrupole magnetic field in the two-dimensional magneto-optical trap mechanism intersects the traveling direction of the cold atomic beam from the cold atomic beam generator, and
in a case where the atomic beam deflector includes the moving molasses mechanism, a drift direction of a standing light wave in the moving molasses mechanism intersects the traveling direction of the cold atomic beam from the cold atomic beam generator.

5. The atomic interferometer according to Claim 4, wherein
each of the moving standing light waves satisfies an nth-order Bragg condition, where n is a positive integer equal to or greater than 2.
